# EUROPÄISCHE PATENTSCHRIFT

(11) **EP 4 250 918 B1**
(45) Veröffentlichungstag und Bekanntmachung des Hinweises auf die Patenterteilung: **06.11.2024**
(21) Anmeldenummer: 21782709.6
(22) Anmeldetag: 22.09.2021
(51) Int. Cl.: G06V 20/10, G06V 20/56, G06V 20/68, A01M 7/00

(54) **VERFAHREN UND VORRICHTUNG ZUR KLASSIFIZIERUNG VON PFLANZEN UND COMPUTERPROGRAMMPRODUKT**
METHOD AND DEVICE FOR THE CLASSIFICATION OF PLANTS AND COMPUTER PROGRAM
PRODÉDÉ ET DISPOSITIF POUR LA CLASSIFICATION DES PLANTES ET PROGRAMME INFORMATIQUE

(30) Priorität: 26.11.2020 DE 102020214838
(43) Veröffentlichungstag der Anmeldung: 04.10.2023
(73) Patentinhaber: Robert Bosch GmbH, 70442 Stuttgart (DE)
(72) Erfinder: KHANI, Farid, 70599 Stuttgart (DE); WEIMER, Andreas, 71116 Gaertringen (DE)
(86) Internationale Anmeldenummer: PCT/EP2021/076023
(87) Internationale Veröffentlichungsnummer: WO 2022/111881

(56) Entgegenhaltungen:
- EP-B1- 3 192 342
- DE-A1- 102017 210 804
- DE-A1- 102018 217 742
- DE-A1- 102018 221 248
- DE-A1- 102018 222 428
- DE-C2- 4 413 739

## Beschreibung

### Technisches Gebiet

Die Erfindung betrifft ein Verfahren und eine Vorrichtung zur Klassifizierung von Pflanzen, wie es verwendet wird, um insbesondere bei landwirtschaftlichen Anwendungen Nutzpflanzen von Unkraut unterscheiden zu können, um dadurch gezielt in Abhängigkeit von der Pflanzenart Behandlungen der Pflanzen durchführen zu können. Ferner betrifft die Erfindung ein Computerprogrammprodukt als Bestandteil einer derartigen Vorrichtung bzw. zum Durchführen des erfindungsgemäßen Verfahrens.

### Stand der Technik

Ein Verfahren zur Klassifizierung von Pflanzen mit den Merkmalen des Oberbegriffs des Anspruchs 1 ist aus der DE 10 2017 210 804 A1 der Anmelderin bekannt. Bei dem bekannten Verfahren wird mittels einer optischen und/oder Infrarot-Erfassungseinheit ein Bereich einer Nutzfläche erfasst und die erfassten Bilddaten ausgewertet. Ziel ist es, Nutzpflanzen zu erkennen, die in Form von Pflanzenreihen angeordnet sind, um dadurch die Nutzpflanzen von zwischen den Nutzpflanzen bzw. Pflanzenreihen sich befindlichen Pflanzen unterscheiden zu können, die insbesondere als Unkraut klassifiziert werden, um dieses beispielsweise mittels entsprechender Spritzmittel behandeln zu können.

Ein vergleichbares Verfahren wird auch in der DE 10 2018 221248 A1 beschrieben.

### Offenbarung der Erfindung

Das erfindungsgemäße Verfahren zur Klassifizierung von Pflanzen mit den Merkmalen des Anspruchs 1 hat den Vorteil, dass es auf besonders sichere und zuverlässige Art und Weise eine erste, insbesondere als Nutzpflanze dienende Pflanzenart, die Bestandteil einer Pflanzenreihe ist, von einer zweiten Pflanzenart unterscheiden kann, die typischerweise in Form eines Unkrauts o.ä. ausgebildet ist, und die mittels eines Spritzmittels behandelt werden soll. Insbesondere ermöglicht es das erfindungsgemäße Verfahren, Randbereiche des Auswertefensters, die mittels der Erfassungseinheit generiert werden, besonders zuverlässig hinsichtlich der tatsächlich vorhandenen Pflanzenart auszuwerten. So ermöglicht es das erfindungsgemäße Verfahren, in dem Randbereich des Auswertefensters erfasste Pflanzen oder Pflanzenbestandteile der ersten Pflanzenart (bzw. Pflanzenreihe) zuzuordnen, welche ansonsten aufgrund ihrer nicht vorhandenen Anbindung bzw. Verbindung mit der Pflanzenreihe der zweiten Pflanzenart zugeordnet werden würde. Somit ermöglicht es das erfindungsgemäße Verfahren insbesondere zu vermeiden, dass Pflanzen beispielsweise mit einem Unkrautvernichtungsmittel o.ä. behandelt werden, da diese fälschlicherweise als Unkraut detektiert worden sind.

Die oben genannten Vorteile des erfindungsgemäßen Verfahrens werden dadurch erzielt, dass Pflanzen oder deren Pflanzenbestandteile zum ersten Auswertezeitpunkt der ersten Pflanzenart zugeordnet werden, wenn diese innerhalb der Auswerteregion als nicht mit einer durch die erste Pflanzenart gebildeten Pflanzenreihe verbunden sind und zusätzlich von einer, insbesondere in oder entgegen einer Bewegungsrichtung der Erfassungseinheit verlaufenden, oberen Grenze oder einer unteren Grenze der Auswerteregion bis zu einem maximalen ersten Abstand in die Auswerteregion hineinragen.

Vorteilhafte Weiterbildungen des erfindungsgemäßen Verfahrens zur Klassifizierung von Pflanzen sind in den Unteransprüchen aufgeführt.

Eine besonders einfache bzw. zuverlässige Zuordnung von Pflanzen bzw. Pflanzenbestandteilen zu der ersten Pflanzenart wird erzielt, wenn Pflanzen oder Pflanzenbestandteile zu einer Pflanzenreihe gehörend erkannt werden, wenn sich die Pflanzen oder Pflanzenbestandteile von der oberen Grenze bis zur unteren, gegenüberliegenden Grenze der Auswerteregion ohne eine Unterbrechung durchgehend erstrecken.

Auch kann es zur weiteren Vereinfachung bzw. Zuordnung der erkannten Pflanzen bzw. Pflanzenbestandteile zu der ersten oder der zweiten Pflanzenart vorgesehen sein, dass die nicht mit der Pflanzenreihe verbundenen Pflanzen oder Pflanzenbestanteile, die zum ersten Auswertezeitpunkt der ersten Pflanzenart zugeordnet werden, zusätzlich innerhalb eines zweiten Abstands von der Pflanzenreihe angeordnet sind. Mit anderen Worten gesagt bedeutet dies, dass Pflanzen oder Pflanzenbestandteile, die in einem bestimmten Mindestabstand von der Pflanzenreihe angeordnet sind, als nicht zu dieser Pflanzenreihe gehörend angesehen werden, dass ein Hineinragen der Pflanze dieser Pflanzenreihe aus einem außerhalb des augenblicklichen Auswertefensters befindlichen Bereichs als unwahrscheinlich angesehen wird.

Weiterhin ist es wesentlich, eine ggf. erforderliche Behandlung der zweiten Pflanzenart, beispielsweise mit einem Spritzmittel, das mittels einer Spritzdüse an einem Spritzgestell selektiv versprüht wird, so rechtzeitig durchführen zu können, dass die hiervon betroffenen Pflanzen bzw. Pflanzenbestandteile sicher erfasst werden. Vor diesem Hintergrund sieht es eine weitere bevorzugte Ausgestaltung des Verfahrens vor, dass die zunächst der ersten Pflanzenart zugeordneten, nicht mit der Pflanzenreihe verbundenen Pflanzen oder Pflanzenbestanteile der zweiten Pflanzenart zugeordnet werden, wenn zu einem zweiten Auswertezeitpunkt, der nach dem ersten Auswertezeitpunkt liegt, die Pflanzen oder Pflanzenteile der einen Abstand von der oberen Grenze oder der unteren Grenze der Auswerteregion aufweisen, der größer ist der erste Abstand. Dadurch wird insbesondere die benötigte Reaktions- bzw. Ansteuerzeit z.B. für eine Spritzdüse ermöglicht, um derartige Pflanzen bzw. Pflanzenbestandteile noch mit dem Spritzmittel behandeln zu können.

Weiterhin kann es vorgesehen sein, dass die zunächst der ersten Pflanzenart zugeordneten, nicht mit der Pflanzenreihe verbundenen Pflanzen oder Pflanzenbestanteile der zweiten Pflanzenart zugeordnet werden, wenn zu einem zweiten Auswertezeitpunkt, der nach dem ersten Auswertezeitpunkt liegt, zwischen den Pflanzen oder Pflanzenbestandteilen und der oberen Grenze oder der unteren Grenze der Auswerteregion ein pflanzenfreier Zwischenraum ausgebildet ist. In diesem Fall kann sicher ausgeschlossen werden, dass die zunächst erfassten und vorläufig der ersten Pflanzenart zugewiesenen Pflanzen bzw. Pflanzenbestandteile mit der Pflanzenreihe verbunden sind. Insbesondere kann es vorgesehen sein, dass die Erfassungseinheit während des Erfassens der Pflanzen oder Pflanzenbestandteile in Richtung der oberen Grenze oder der unteren Grenze der Auswerteregion bewegt wird. Typischerweise findet dabei eine kontinuierliche Bewegung der an einem landwirtschaftlichen Fahrzeug angeordneten Erfassungseinheit statt, und die von der Erfassungseinheit aufgenommenen Bilder werden beispielsweise mit einer bestimmten Frequenz erfasst bzw. generiert.

Hierbei ist es besonders vorteilhaft, wenn Bilddaten von zwei aufeinanderfolgend ausgewerteten Auswerteregionen einander teilweise in Richtung der oberen Grenze oder der unteren Grenze der Auswerteregion überlappen. Dadurch wird ein kontinuierlicher Datenfluss ermöglicht und insbesondere eine besonders sichere und zuverlässige Erkennung der (ersten) Pflanzenart, die mit der Pflanzenreihe verbunden sind.

Weiterhin umfasst die Erfindung auch eine Vorrichtung gemäß Anspruch 8, insbesondere als Bestandteil eines landwirtschaftlichen Fahrzeugs, umfassend eine optische und/oder Infrarot-Erfassungseinheit und eine Steuereinrichtung mit einem Algorithmus, der dazu ausgebildet ist, das erfindungsgemäße Verfahren, d.h. die Schritte des Verfahrens, die die Auswertung der von der Erfassungseinheit erfassten Bilddaten betreffen, durchzuführen.

In Weiterbildung einer derartigen Vorrichtung kann es vorgesehen sein, dass zusätzlich eine Spritzeinheit mit wenigstens einer selektiv ansteuerbaren Spritzdüse zur Behandlung von Pflanzen oder Pflanzenbestandteilen der zweiten Pflanzenart vorgesehen ist.

Zuletzt umfasst die Erfindung auch ein Computerprogrammprodukt gemäß Anspruch 10, insbesondere in Form eines Datenprogramms oder eines Datenträgers, das dazu ausgebildet ist, wenigstens einen erfindungsgemäßen Verfahrensschritt betreffend die Auswertung der von der Erfassungseinheit erfassten Bilddaten auszuführen oder das als Bestandteil der Vorrichtung dient.

Weitere Vorteile, Merkmale und Einzelheiten der Erfindung ergeben sich aus der nachfolgenden Beschreibung bevorzugter Ausführungsformen der Erfindung sowie anhand der Zeichnungen.

### Kurze Beschreibung der Zeichnungen

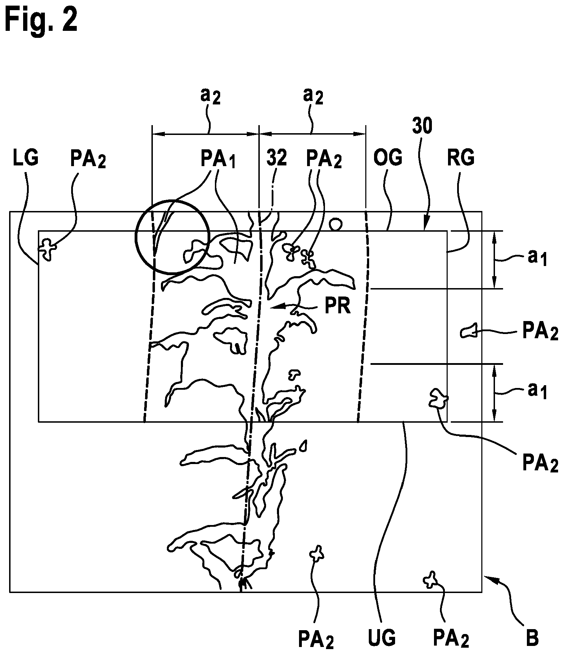

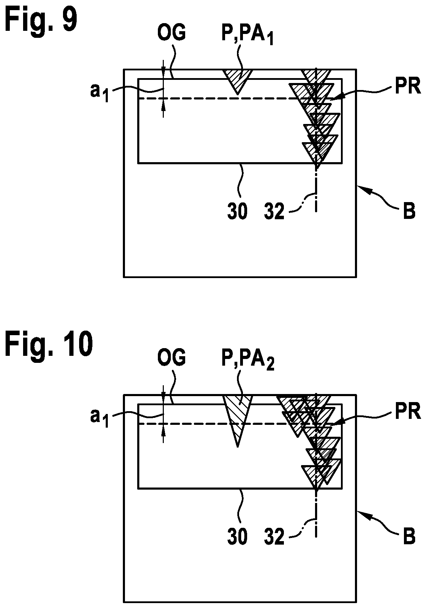

Fig. 1 zeigt in einer vereinfachten Seitenansicht ein landwirtschaftliches Fahrzeug beim Überfahren einer mit Pflanzen bewachsenen landwirtschaftlichen Nutzfläche,
Fig. 2 eine Bildaufnahme einer Erfassungseinheit während des Überfahrens der Nutzfläche gemäß Fig. 1 und
Fig. 3
   bis
   Fig. 10 in jeweils vereinfachten Darstellungen zu unterschiedlichen Zeitpunkten aufgenommene Bereiche der von dem Fahrzeug überfahrenen Nutzfläche entsprechend der Fig. 2.

### Ausführungsformen der Erfindung

Gleiche Elemente bzw. Elemente mit gleicher Funktion sind in den Figuren mit den gleichen Bezugsziffern versehen.

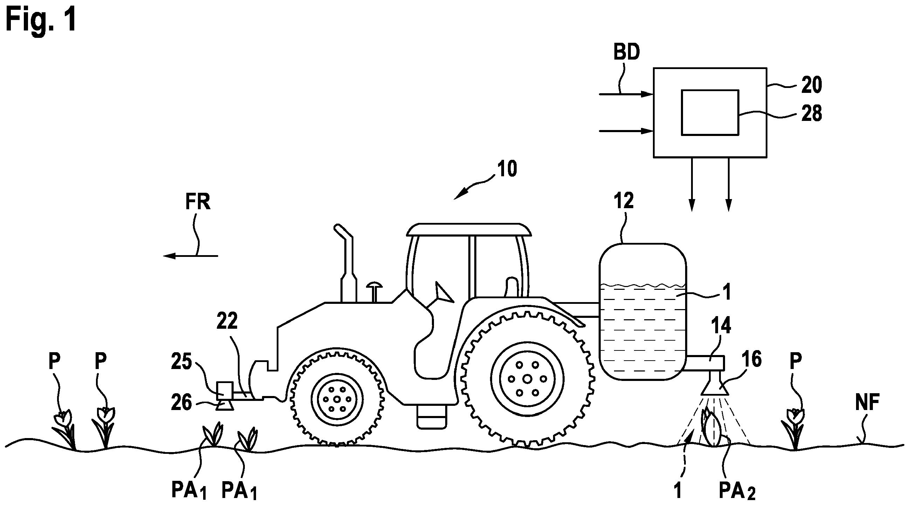

In der Fig. 1 ist ein landwirtschaftliches Fahrzeug 10 in Form eines Traktors o.ä. dargestellt, das in einer Fahrtrichtung FR auf einer Nutzfläche NF entlangfährt. Auf der Nutzfläche NF befinden sich Pflanzen P, die zumindest in zwei Pflanzenarten PA₁ und PA₂ unterschieden werden können. Bei der ersten Pflanzenart PA₁ handelt es sich vorzugsweise um Nutzpflanzen, welche in Form von parallel zueinander angeordneten Pflanzenreihen PR auf der Nutzfläche NF ausgesät wurden bzw. dort wachsen. Demgegenüber handelt es sich bei der zweiten Pflanzenart PA₂ insbesondere um Unkraut, das mittels eines Spritzmittels 1 behandelt werden soll. Zur Behandlung der zweiten Pflanzenart PA₂ weist das landwirtschaftliche Fahrzeug 10 einen Vorratstank 12 im Heckbereich auf, der zur Speicherung des Spritzmittels 1 dient. Weiterhin ist am Heckbereich des Fahrzeugs 10 eine Spritzeinheit mit einem Spritzgestell 14 angeordnet, das sich quer zur Fahrtrichtung FR des Fahrzeugs 10 erstreckt, d.h. senkrecht zur Zeichenebene der Fig. 1. In Längsrichtung des Spritzgestells 14 weist dieses, wie an sich bekannt, beispielsweise in gleichmäßigen horizontalen Abständen zueinander angeordnete Spritzdüsen 16 auf, die selektiv von einer fahrzeuginternen Steuereinrichtung 20 angesteuert werden können, um im Sprühbereich der jeweiligen Spritzdüse 16 befindliche Pflanzen P der zweiten Pflanzenart PA₂ mit dem Spritzmittel 1 besprühen zu können. Hierzu sind die Spritzdüsen 16 weiterhin in an sich bekannter Art und Weise über Ventileinrichtungen und Flüssigkeitsleitungen (nicht dargestellt) mit dem Vorratstank 12 verbunden.

Zur Detektion der Pflanzen P bzw. zur Unterscheidung der beiden unterschiedlichen Pflanzenarten PA₁ und PA₂ ist darüber hinaus beispielhaft am Frontbereich des landwirtschaftlichen Fahrzeugs 10 eine an einem Ausleger 22 befestigte Erfassungseinheit 25 vorgesehen.

Die Erfassungseinheit 25 umfasst beispielhaft mehrere gleiche bzw. gleichartige, ebenfalls in gleichmäßigen horizontalen Abständen senkrecht zur Zeichenebene der Fig. 1 angeordnete optische und/oder Infrarot-Aufnahmeeinheiten 26, die beispielhaft jeweils einen bestimmten Teilbereich der von dem landwirtschaftlichen Fahrzeug 10 überfahrenen Nutzfläche NF im Bereich der von den Spritzdüsen 16 behandelbaren Areale erfassen können. Von den Aufnahmeeinheiten 26 werden jeweils beispielsweise in gleichmäßigen Zeitabständen (ggf. geschwindigkeitsabhängig) Bilddaten BD erzeugt, die der Steuereinrichtung 20 als Eingangsgröße zugeführt werden. Die Steuereinrichtung 20, der typischerweise zusätzliche Daten als Eingangsgröße zugeführt werden, weist u.a. einen Algorithmus 28, insbesondere in Form eines Computerprogrammprodukts auf, der dazu ausgebildet ist, die Bilddaten BD hinsichtlich des Vorkommens der beiden Pflanzenarten PA₁ und PA₂ zu analysieren.

Wie bereits oben erläutert, zeichnen sich die Pflanzen P der ersten Pflanzenart PA₁ dadurch aus, dass diese in Form von Pflanzenreihen PR auf der Nutzfläche NF angeordnet sind bzw. wachsen. In der Fig. 2 ist dargestellt, wie innerhalb eines aufgenommenen Bildes B einer Aufnahmeeinheit 26 beim Überfahren der Nutzfläche NF die Pflanzenreihe PR detektiert wurde. Die Pflanzenreihe PR wird dadurch als solche erkannt, dass innerhalb einer Auswerteregion 30 des Bildes B, die beispielhaft in Draufsicht rechteckförmig ausgebildet ist und eine untere Grenze UG, eine obere Grenze OG, eine rechte Grenze RG und eine linke Grenze LG aufweist, die Pflanzen P der ersten Pflanzenart PA₁ alle miteinander verbunden sind, d.h., dass zumindest eine durchgehende Verbindung zwischen den Pflanzen P besteht.

Weiterhin sind innerhalb der Auswerteregion 30 nicht mit der Pflanzenreihe PR verbundene, einzeln stehende Pflanzen P erkennbar. Diese werden grundsätzlich als der zweiten Pflanzenart PA₂ zugehörig klassifiziert. Im Bereich der oberen Grenze OG des Auswertefensters 30 ragt in das Auswertefenster 30 eine Pflanze P1 nahe der Pflanzenreihe PR hinein, die gemäß des erfindungsgemäßen Verfahrens zunächst als der ersten Pflanzenart PA1 zugehörig klassifiziert wird, obwohl diese in dem Bild B in der Fig. 2 nicht mit der Pflanzenreihe PR verbunden ist. Zur Einklassifizierung in die erste Pflanzenart PA₁ ist es darüber hinaus erforderlich, dass diese Pflanze P1 innerhalb eines maximalen ersten oberen (oder unteren) Abstands a₁ von der oberen Grenze OG bzw. unteren Grenze UG der Auswerteregion 30 erfasst wird. Ist bereits eine Pflanzenreihe PR detektiert worden, wie die bei der Fig. 2 der Fall ist, ist darüber hinaus insbesondere vorgesehen, dass sich die Pflanze P1 innerhalb eines maximalen seitlichen Abstands a₂, charakterisiert durch die Pflanzenreihenmittelpunktlinie 32 der Pflanzenreihe PR, befinden muss.

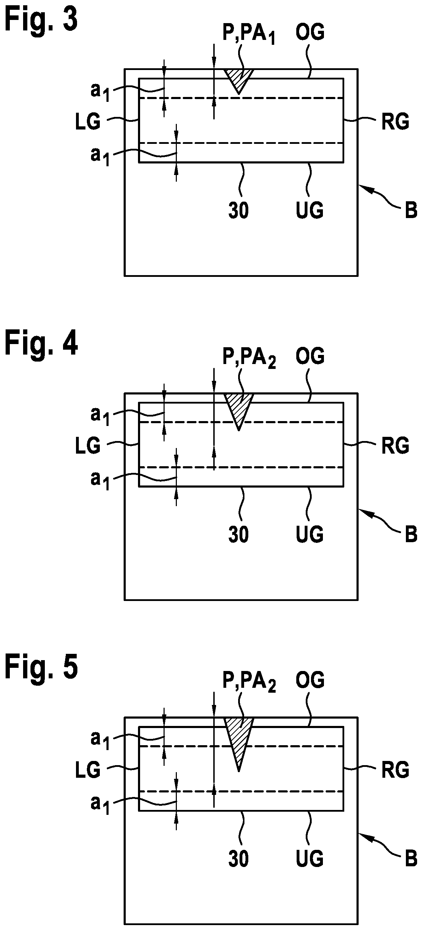

In den nachfolgenden Fig. 3 bis 11 sind die mittels der Erfassungseinheit 25 erfassten Pflanzen P in der Auswerteregion 30 der Einfachheit halber durch Dreiecke symbolisch dargestellt.

In der Fig. 3 ist nochmals eine Einklassifizierung einer Pflanze P in die Pflanzenart PA₁ dargestellt, da sich die Pflanze P innerhalb des ersten Abstands a₁ von der oberen Grenze OG der Auswerteregion 30 befindet, obwohl keine Pflanzenreihe PR detektiert wurde.

Beim Überfahren der Nutzfläche NF durch das landwirtschaftliche Fahrzeug 10 werden, wie bereits erläutert, von der Erfassungseinheit 25 fortlaufend Bilddaten BD bzw. Auswertefenster 26 generiert, die sich vorzugsweise in Fahrtrichtung FR geringfügig überschneiden, um eine kontinuierliche Erfassung der überfahrenen Nutzfläche NF und der auf der Nutzfläche NF befindlichen Pflanzen P zu ermöglichen. In den Fig. 4 und 5 ist dargestellt, dass bei zwei aufeinanderfolgenden Aufnahmen der Erfassungseinheit 25 zu zwei aufeinanderfolgenden Auswertezeitpunkten eine Pflanze P den Abstand a₁ von der oberen Grenze OG der Auswerteregion 26 überschritten hat. Daher wird diese Pflanze P als der zweiten Pflanzenart PA₂ zugehörig einklassifiziert.

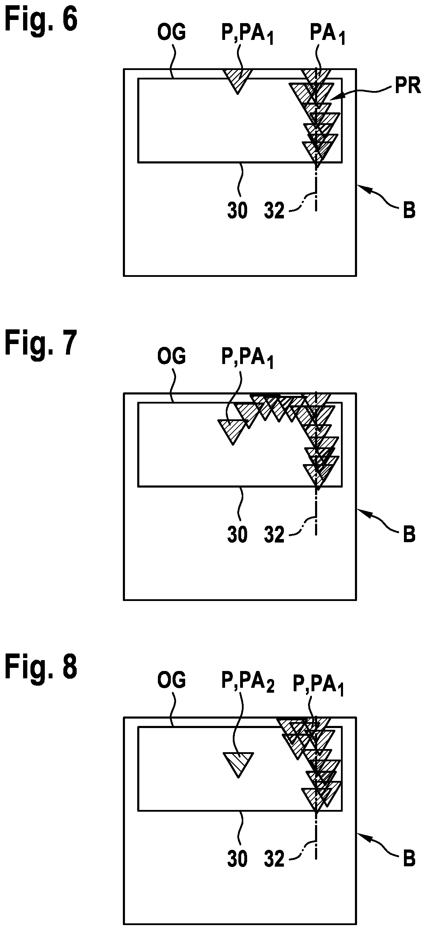

In den Fig. 6 und 7 ist bei zwei aufeinanderfolgenden Bildern dargestellt, wie die in dem Bild 6 links neben der Pflanzenreihe PR befindliche Pflanze P zunächst als der ersten Pflanzenart PA₁ zugehörig einklassifiziert wurde. Beim weiteren Überfahren der Nutzfläche NF und Erfassen zu einem zweiten Aufnahmezeitpunkt erkennt man, dass die in der Fig. 6 von der oberen Grenze OG in die Auswerteregion 30 hineinragende Pflanze P im weiteren Verlauf mit der Pflanzenreihe PR verbunden ist, sodass die Einklassifizierung zur ersten Pflanzenart PA₁ sich als richtig erwiesen hat. Demgegenüber ist in der Fig. 8 dargestellt, dass die ebenfalls zunächst links neben der Pflanzenreihe PR befindliche, und der ersten Pflanzenart PA₁ zugeordnete Pflanze P entsprechend der Fig. 7 im weiteren Verlauf (Fig.8) sich als separate, nicht mit der Pflanzenreihe PR verbundene Pflanze P herausgestellt hat. In diesem Fall findet eine Umklassifizierung von der ersten Pflanzenart PA₁ in die Pflanzenart PA₂ statt.

Zuletzt ist in der Figurenfolge der Fig. 9 und 10 dargestellt, dass die sich links neben der Pflanzenreihe PR befindliche Pflanze P, da diese von der oberen Grenze OG in die Auswerteregion 30 hineinragt und deren Abstand von der oberen Grenze OG geringer ist als der Abstand a₁, zunächst in die erste Pflanzenart PA₁ einklassifiziert wurde. Zu einem späteren Aufnahmezeitpunkt gemäß der Fig. 10 ist dargestellt, dass diese Pflanze P zwar weiterhin von der oberen Grenze OG in die Auswerteregion 30 hineinragt, jedoch zwischenzeitlich den kritischen Abstand a₁ überschritten hat. In diesem Fall findet eine Umklassifizierung von der ersten Pflanzenart PA₁ in die zweite Pflanzenart PA₂ statt, um noch eine rechtzeitige Aktivierung der entsprechenden Spritzdüse 16 an dem Spritzgestell 14 mittels der Steuereinrichtung 20 zu ermöglichen. Es ist in diesem Fall zwar nicht ausgeschlossen, dass diese Pflanze P im weiteren Verlauf sich noch mit der Pflanzenreihe PR verbindet bzw. als Bestandteil der Pflanzenreihe PR detektiert wird, dies wird jedoch in Kauf genommen, um eine rechtzeitige Behandlung der Pflanze P mittels des Spritzmittels 1 zu ermöglichen.

Das soweit beschriebene Verfahren bzw. die Vorrichtung kann in vielfältiger Art und Weise abgewandelt bzw. modifiziert werden, ohne vom Erfindungsgedanken, wie er in den angehängten Ansprüchen definiert wird, abzuweichen.

## Patentansprüche

1. Verfahren zur Klassifizierung von Pflanzen (P), bei dem die Pflanzen (P) oder deren Pflanzenbestandteile mittels einer optischen und/oder Infrarot-Erfassungseinheit (25) innerhalb einer Auswerteregion (30) zu einem ersten Auswertezeitpunkt detektiert und die erfassten Bilddaten (BD) der Erfassungseinheit (25) mittels eines Algorithmus (28) einer Steuereinrichtung (20) ausgewertet werden, wobei mittels der Auswertung wenigstens eine erste Pflanzenart (PA₁) von wenigstens einer zweiten Pflanzenart (PA₂) unterschieden werden kann, und wobei die zweite Pflanzenart (PA₂) insbesondere mit einem Medium, vorzugsweise einem flüssigen Spritzmittel (1), behandelt wird,
**dadurch gekennzeichnet,**
**dass** Pflanzen (P) oder deren Pflanzenbestandteile zum ersten Auswertezeitpunkt der ersten Pflanzenart (PA₁) zugeordnet werden, wenn diese innerhalb der Auswerteregion (30) als nicht mit einer durch die erste Pflanzenart (PA₁) gebildeten Pflanzenreihe (PR) verbunden sind und zusätzlich von einer oberen Grenze (OG) oder einer unteren Grenze (UG) der Auswerteregion (30) bis zu einem maximalen ersten Abstand (a₁) in die Auswerteregion (30) hineinragen.

2. Verfahren nach Anspruch 1,
**dadurch gekennzeichnet,**
**dass** Pflanzen (P) oder Pflanzenbestandteile zu einer Pflanzenreihe (PR) gehörend erkannt werden, wenn sich die Pflanzen (P) oder Pflanzenbestandteile von der oberen Grenze (OG) bis zur unteren, gegenüberliegenden Grenze (UG) der Auswerteregion (30) ohne eine Unterbrechung durchgehend erstrecken.

3. Verfahren nach Anspruch 1 oder 2,
**dadurch gekennzeichnet,**
**dass** die nicht mit der Pflanzenreihe (PR) verbundenen Pflanzen (P) oder Pflanzenbestanteile, die zum ersten Auswertezeitpunkt der ersten Pflanzenart (PA₁) zugeordnet werden, zusätzlich innerhalb eines zweiten Abstands (a₂) von der Pflanzenreihe (PR) angeordnet sind.

4. Verfahren nach einem der Ansprüche 1 bis 3,
**dadurch gekennzeichnet,**
**dass** die zunächst der ersten Pflanzenart (PA₁) zugeordneten, nicht mit der Pflanzenreihe (PR) verbundenen Pflanzen (P) oder Pflanzenbestanteile der zweiten Pflanzenart (PA₂) zugeordnet werden, wenn zu einem zweiten Auswertezeitpunkt, der nach dem ersten Auswertezeitpunkt liegt, die Pflanzen (P) oder Pflanzenteile die einen Abstand von der oberen Grenze (OG) oder der unteren Grenze (UG) der Auswerteregion (30) aufweisen, der größer ist als der erste Abstand (a₁).

5. Verfahren nach einem der Ansprüche 1 bis 4,
**dadurch gekennzeichnet,**
**dass** die zunächst der ersten Pflanzenart (PA₁) zugeordneten, nicht mit der Pflanzenreihe (PR) verbundenen Pflanzen (P) oder Pflanzenbestanteile der zweiten Pflanzenart (PA₂) zugeordnet werden, wenn zu einem zweiten Auswertezeitpunkt, der nach dem ersten Auswertezeitpunkt liegt, zwischen den Pflanzen (P) oder Pflanzenbestandteilen und der oberen Grenze (OG) oder der unteren Grenze (UG) der Auswerteregion (30) ein pflanzenfreier Zwischenraum ausgebildet ist.

6. Verfahren nach einem der Ansprüche 1 bis 5,
**dadurch gekennzeichnet,**
**dass** die Erfassungseinheit (25) während des Erfassens der Pflanzen (P) oder Pflanzenbestandteile in Richtung der oberen Grenze (OG) oder der unteren Grenze (UG) der Auswerteregion (30) bewegt wird.

7. Verfahren nach Anspruch 6,
**dadurch gekennzeichnet,**
**dass** Bilddaten (BD) von zwei aufeinanderfolgend ausgewerteten Auswerteregionen (30) einander teilweise in Richtung der oberen Grenze (OG) oder der unteren Grenze (UG) der Auswerteregion (30) überlappen.

8. Vorrichtung, insbesondere als Bestandteil eines landwirtschaftlichen Fahrzeugs (10), umfassend eine optische und/oder Infrarot-Erfassungseinheit (25) und eine Steuereinrichtung (20) mit einem Algorithmus (28), der dazu ausgebildet ist, die Schritte des Verfahrens zur Auswertung der durch die Erfassungseinheit (25) erfassten Bilddaten (BD) nach einem der Ansprüche 1 bis 5 auszuführen.

9. Vorrichtung nach Anspruch 8,
**dadurch gekennzeichnet,**
**dass** zusätzlich eine Spritzeinheit (14) mit wenigstens einer selektiv ansteuerbaren Spritzdüse (16) zur Behandlung von Pflanzen (P) oder Pflanzenbestandteilen der zweiten Pflanzenart (PA₂) vorgesehen ist.

10. Computerprogrammprodukt, insbesondere Datenprogramm oder Datenträger, umfassend Befehle, die bei der Ausführung des Programms durch die Steuereinrichtung (20) diese veranlassen, die Schritte des Verfahrens zur Auswertung der durch die Erfassungseinheit (25) erfassten Bilddaten (BD) nach einem der Ansprüche 1 bis 5 auszuführen.

## Claims

1. Method for classifying plants (P), in which the plants (P) or plant parts thereof are detected by way of an optical and/or infrared capture unit (25) within an evaluation region (30) at a first evaluation time and the captured image data (BD) from the capture unit (25) are evaluated by way of an algorithm (28) of a controller (20), wherein the evaluation makes it possible to distinguish at least one first plant type (PA₁) from at least one second plant type (PA₂), and wherein the second plant type (PA₂) is treated in particular with a medium, preferably with a liquid spray (1),
**characterized in that**
plants (P) or plant parts thereof are assigned to the first plant type (PA₁) at the first evaluation time if, within the evaluation region (30), they are not linked to a row of plants (PR) formed by the first plant type (PA₁) and additionally protrude into the evaluation region (30) by up to a maximum first distance (a₁) from an upper boundary (OG) or a lower boundary (UG) of the evaluation region (30).

2. Method according to Claim 1,
**characterized in that**
plants (P) or plant parts are recognized as belonging to a row of plants (PR) if the plants (P) or plant parts extend continuously without interruption from the upper boundary (OG) to the lower, opposite boundary (UG) of the evaluation region (30).

3. Method according to Claim 1 or 2,
**characterized in that**
the plants (P) or plant parts not linked to the row of plants (PR) and assigned to the first plant type (PA₁) at the first evaluation time are additionally arranged within a second distance (a₂) from the row of plants (PR).

4. Method according to one of Claims 1 to 3,
**characterized in that**
the plants (P) or plant parts initially assigned to the first plant type (PA₁) and not linked to the row of plants (PR) are assigned to the second plant type (PA₂) if, at a second evaluation time after the first evaluation time, the plants (P) or plant parts have a distance from the upper boundary (OG) or the lower boundary (UG) of the evaluation region (30) that is greater than the first distance (a₁).

5. Method according to one of Claims 1 to 4,
**characterized in that**
the plants (P) or plant parts initially assigned to the first plant type (PA₁) and not linked to the row of plants (PR) are assigned to the second plant type (PA₂) if, at a second evaluation time after the first evaluation time, a plant-free gap is formed between the parts (P) or plant parts and the upper boundary (OG) or the lower boundary (UG) of the evaluation region (30).

6. Method according to one of Claims 1 to 5,
**characterized in that**
the capture unit (25) is moved in the direction of the upper boundary (OG) or of the lower boundary (UG) of the evaluation region (30) while capturing the plants (P) or plant parts.

7. Method according to Claim 6,
**characterized in that**
image data (BD) from two successively evaluated evaluation regions (30) at least partially overlap one another in the direction of the upper boundary (OG) or of the lower boundary (UG) of the evaluation region (30).

8. Device, in particular as part of an agricultural vehicle (10), comprising an optical and/or infrared capture unit (25) and a controller (20) having an algorithm (28) that is designed to carry out the steps of the method for evaluating the image data (BD) captured by the capture unit (25) according to one of Claims 1 to 5.

9. Device according to Claim 8,
**characterized in that**
provision is additionally made for a spraying unit (14) having at least one selectively actuatable spray nozzle (16) for treating plants (P) or plant parts of the second plant type (PA₂).

10. Computer program product, in particular data program or data medium, comprising instructions that, when the program is executed by the controller (20), prompt the controller to carry out the steps of the method for evaluating the image data (BD) captured by the capture unit (25) according to one of Claims 1 to 5.

## Revendications

1. Procédé de classification de plantes (P), dans lequel les plantes (P) ou leurs composants de plante sont détectés au moyen d'une unité de détection (25) optique et/ou infrarouge à l'intérieur d'une région d'évaluation (30) à un premier temps d'évaluation, et les données d'image détectées (BD) de l'unité de détection (25) sont évaluées au moyen d'un algorithme (28) d'un dispositif de commande (20), dans lequel l'évaluation permet de distinguer au moins un premier type de plante (PA₁) d'au moins un second type de plante (PA₂), et dans lequel le second type de plante (PA₂) est traité en particulier avec un milieu, de préférence un liquide de pulvérisation (1),
**caractérisé**
**en ce que** des plantes (P) ou leurs composants de plante sont attribués au premier temps d'évaluation au premier type de plante (PA₁) si elles ne sont pas reliées à l'intérieur de la région d'évaluation (30) à une rangées de plantes (PR) formée par le premier type de plante (PA₁), et si en plus elles pénètrent dans la région d'évaluation (30) d'une limite supérieure (OG) ou d'une limite inférieure (UG) de la région d'évaluation (30) jusqu'à une première distance maximale (a₁).

2. Procédé selon la revendication 1,
**caractérisé**
**en ce que** des plantes (P) ou des composants de plante sont identifiés comme appartenant à une rangée de plantes (PR) si les plantes (P) ou composants de plantes s'étendent en continu sans interruption de la limite supérieure (OG) à la limite opposée, inférieure (UG) de la région d'évaluation (30).

3. Procédé selon la revendication 1 ou 2,
**caractérisé**
**en ce que** des plantes (P) ou composants de plante, non reliés à la rangée de plantes (PR), qui sont attribués au premier temps d'évaluation au premier type de plante (PA₁) sont de plus disposés dans une seconde distance (a₂) de la rangée de plantes (PR).

4. Procédé selon l'une quelconque des revendications 1 à 3,
**caractérisé**
**en ce que** les plantes (P) ou composants de plante d'abord attribués au premier type de plante (PA₁), non reliés à la rangée de plantes (PR), sont attribués au second type de plante (PA₂) si à un second temps d'évaluation qui se trouve après le premier temps d'évaluation, les plantes (P) ou composants de plante présentent une distance de la limite supérieure (OG) ou de la limite inférieure (UG) de la région d'évaluation (30) qui est supérieure à la première distance (a₁).

5. Procédé selon l'une quelconque des revendications 1 à 4,
**caractérisé**
**en ce que** les plantes (P) ou composants de plante d'abord attribués au premier type de plante (PA₁), non reliés à la rangée de plantes (PR), sont attribués au second type de plante (PA₂) si à un second temps d'évaluation qui se trouve après le premier temps d'évaluation, un espace sans plantes est formé entre les plantes (P) ou les composants de plante et la limite supérieure (OG) ou la limite inférieure (UG) de la région d'évaluation (30).

6. Procédé selon l'une quelconque des revendications 1 à 5,
**caractérisé**
**en ce que** l'unité de détection (25) est déplacée pendant la détection des plantes (P) ou des composants de plante en direction de la limite supérieure (OG) ou de la limite inférieure (UG) de la région d'évaluation (30).

7. Procédé selon la revendication 6,
**caractérisé**
**en ce que** des données d'image (BD) de deux régions d'évaluation (30) évaluées successivement se chevauchent partiellement en direction de la limite supérieure (OG) ou de la limite inférieure (UG) de la région d'évaluation (30).

8. Dispositif, en particulier faisant partie d'un véhicule agricole (10), comprenant une unité de détection (25) optique et/ou infrarouge et un dispositif de commande (20) avec un algorithme (28) qui est réalisé pour exécuter les étapes du procédé d'évaluation des données d'image (BD) détectées par l'unité de détection (25) selon l'une quelconque des revendications 1 à 5.

9. Dispositif selon la revendication 8,
**caractérisé**
**en ce qu'**en plus une unité de pulvérisation (14) pourvue d'au moins une buse de pulvérisation (16) pouvant être commandée de manière sélective est prévue pour le traitement de plantes (P) ou de composants de plante du second type de plante (PA₂).

10. Produit de programme informatique, en particulier programme de données ou support de données, comprenant des instructions qui, lorsque le programme est exécuté par le dispositif de commande (20) font que celle-ci exécute les étapes du procédé d'évaluation des données d'image (BD) détectées par l'unité de détection (25) selon l'une quelconque des revendications 1 à 5.
